# EUROPÄISCHE PATENTSCHRIFT

(11) **EP 1 001 203 B1**
(45) Veröffentlichungstag und Bekanntmachung des Hinweises auf die Patenterteilung: **23.08.2006**
(21) Anmeldenummer: 99122444.5
(22) Anmeldetag: 11.11.1999
(51) Int. Cl.: F16K 35/02, F16K 31/60

(54) **Drehgriff für ein Sanitärventil**
Rotary handle for a sanitary valve
Poignée rotative pour un robinet sanitaire

(30) Priorität: 14.11.1998 DE 19852618
(43) Veröffentlichungstag der Anmeldung: 17.05.2000
(73) Patentinhaber: Hansgrohe AG, 77761 Schiltach (DE)
(72) Erfinder: Lorch, Werner, 78713 Schramberg (DE)
(74) Vertreter: Patentanwälte Ruff, Wilhelm, Beier, Dauster & Partner

(56) Entgegenhaltungen:
- DE-A- 4 417 485
- DE-U- 9 300 841
- US-A- 4 232 817
- US-A- 5 230 465

## Beschreibung

Es ist bekannt, Drehgriffe und Sanitärventile so auszugestalten, dass eine Verdrehung nur um einen bestimmten Winkel möglich ist, bevor ein Anschlag wirksam wird. Bei einem Ventil dieser Art (EP 621427) kann der Anschlag durch Drücken eines Betätigungsknopfes überwunden werden. Der Betätigungsknopf wird durch eine Feder beaufschlagt, die sich längs des Umfangs an der Innenseite des Griffs erstreckt.

Eine ähnliche Sanitärarmatur mit einer Drucktaste, die zum Überwinden des Anschlags eingedrückt werden kann, ist aus DE 4417485 bekannt.

Es ist bereits eine Sanitärarmatur mit einem Griff bekannt, bei der an der Sanitärarmatur ein fester Anschlag und an dem Griff ein gegenüber dem Griff verstellbares Anschlagelement vorhanden ist (DE 9300841). Das verstellbare Anschlagelement ist in einer radialen Lagerung des Griffs geführt.

Ebenfalls bekannt ist einer Sanitärarmatur mit einem Griff (US-5230465), bei der an dem Griff ein Betätigungselement vorgesehen ist, das einstückig ein Anschlagelement aufweist.

Bei einer weiteren bekannten Sanitärarmatur (DE 4417485) ist an dem Griff ein nicht verstellbarer Anschlag vorhanden, der mit einem der Sanitärarmatur zugeordneten verstellbaren Anschlagelement zusammenwirkt.

Weiterhin bekannt ist ein Griff für ein Thermostatventil, bei dem an dem Ventil ein federndes Anschlagelement ausgebildet ist, das mit einer festen Anschlagfläche des Griffs zusammen wirken kann (US 4232817).

Der Erfindung liegt die Aufgabe zugrunde, eine einfache und vielseitig verwendbare Anschlagbegrenzung zu schaffen.

Zur Lösung dieser Aufgabe schlägt die Erfindung einen Drehgriff mit den Merkmalen des Anspruchs 1 vor. Weiterbildungen der Erfindung sind Gegenstand der abhängigen Ansprüche, deren Wortlaut durch Bezugnahme zum Inhalt der Beschreibung gemacht wird.

Bei dem dem Ventil zugeordneten Anschlagelement kann es sich um ein solches handeln, das fest an dem Ventil ausgebildet ist, oder aber insbesondere um ein Anschlagelement, das hülsenartig aufgebaut ist und in verschiedenen Winkelpositionen auf das Ventil aufgesetzt werden kann.

Der Eingriff zwischen den beiden Anschlagelementen besteht in der Regel darin, dass die beiden Anschlagelemente bei der Verdrehung des Drehgriff gegenseitig zur Anlage kommen und dadurch eine weitere Drehung des Drehgriffs verhindern. Die Anschlagbegrenzung dient dazu, entweder die Temperatur oder die Menge des ausströmenden Wassers zu begrenzen.

Die Überwindung des Anschlags kann durch eine beliebig gestaltete Betätigung des Betätigungselements erfolgen, beispielsweise durch eine Verdrehung eines an dem Drehgriff zugänglichen Elements. Besonders günstig ist es, wenn das Betätigungselement durch eine Feder in die Stellung beaufschlagt ist, in der die beiden Anschläge zusammenwirken können.

Eine besonders sinnvolle Art der Betätigung des Griffanschlags kann darin bestehen, dass dieser verschiebbar ist, insbesondere etwa radial zur Drehachse des Griffs und damit auch der Spindel.

In nochmaliger Weiterbildung kann vorgesehen sein, dass die Feder, die das Anschlagelement beaufschlagt, aus Kunststoff besteht und insbesondere einstückig mit dem Anschlagelement ausgebildet ist. Auf diese Weise lässt sich der Drehgriff nicht nur sehr einfach herstellen, sondern auch leicht montieren, da nur ein einziges Element hergestellt und in den Drehgriff eingesetzt zu werden braucht.

Insbesondere kann vorgesehen sein, dass die Feder als Bügel ausgebildet ist, der sich im Bereich einer einem Betätigungselement diametral gegenüberliegenden Stelle an dem Griff abstützt, insbesondere an der Innenseite einer Griffschale. Es steht auf diese Weise ein Federweg zur Verfügung, der auch bei Betätigung nicht zu einer starken Belastung der Feder führt.

Insbesondere kann vorgesehen sein, dass die Feder als geschlossener Bügel ausgebildet ist, der vorzugsweise symmetrisch ausgebildet ist, insbesondere symmetrisch zu einer das Betätigungselement des Griffanschlags mit der Abstützstelle verbindenden Linie.

Die Stopfläche des dem Ventil zugeordneten Anschlusselements kann in Weiterbildung der Erfindung an einem sich etwa in Drehrichtung um die Drehachse erstreckenden Wandabschnitt ausgebildet sein, so dass das die Stopfläche aufweisende Element des dem Griff zugeordneten Anschlagelements nach Überwindung der Drehbegrenzung gleitend an dem Wandabschnitt anliegt. Dieser Wandabschnitt kann dazu dienen, dass bei Zurückdrehen des Drehgriffs kein Widerstand zu überwinden ist.

Erfindungsgemäß kann vorgesehen sein, dass der Wandabschnitt einen Quersteg aufweist, der im Weg der Stopfläche des dem Griff zugeordneten Anschlusselements liegt. Dadurch kann eine Begrenzung der Drehbewegung nach Überwindung des Anschlags bewirkt werden. Außerdem kann der Quersteg auch zu einer Verstärkung des Wandabschnitts dienen.

Der Wandabschnitt kann insbesondere zylindrisch ausgebildet sein. In axialer Richtung weist er eine Abmessung auf, die etwa der in gleicher Richtung gemessenen Abmessung der Stopfläche des dem Drehgriff zugeordneten Anschlusselements entspricht.

Erfindungsgemäß kann der Wandabschnitt koaxial zu der Drehachse angeordnet sein.

Es ist aber ebenfalls möglich und wird von der Erfindung vorgeschlagen, dass der Wandabschnitt exzentrisch zu der Drehachse angeordnet sein kann. Dies bedeutet, dass nach Überwinden des Anschlags durch Betätigen des Betätigungselements das Anschlagelement bei der Bewegung den Wandabschnitt entlang wieder etwas in seine ursprüngliche Position zurückgeführt werden kann.

Eine weitere Möglichkeit kann darin bestehen, dass der Wandabschnitt spiralförmig ausgebildet ist.

Mit beiden Möglichkeiten kann erreicht werden, dass der Wandabschnitt so verläuft, dass er an seinem seiner stopfläche abgewandten Ende nicht mehr im Wege der Stopfläche des Griffanschlags liegt. Diese Möglichkeit ist für alle Fälle sinnvoll, wo die Spindel um mehr als eine volle Umdrehung verstellt werden kann. Da der Wandabschnitt sich nur über einen Teil des Umfangs erstrecken kann, beispielsweise um einen halben Umfang, wird es auf diese Weise möglich, dass beim Zurückdrehen des Drehgriffs kein Anschlag wirksam wird. Dies kann auch dadurch erreicht werden, dass der Wandabschnitt an seinem seiner Stopfläche abgewandten Ende nach Art eines Trichters ausgebildet ist.

Erfindungsgemäß ist das dem Drehgriff zugeordnete Anschlagelement auf der Hülse geführt , die zum Verbinden des Drehgriffs mit der Drehspindel dient. Es kann damit erreicht werden, dass sich das Anschlagelement bei seiner Bewegung sicher führen lässt und gegen ein Verkippen oder Verkanten sichern lässt.

Insbesondere kann vorgesehen sein, dass der Griffanschlag einen Führungsabschnitt mit einer Öffnung aufweist, durch die die Hülse hindurchgreift und an deren Rand die Hülse mindestens in der Anschlagposition des Griffanschlags anliegt.

In Weiterbildung kann vorgesehen sein, dass die Hülse in beiden Endstellungen der Bewegung des Griffanschlags an dem Rand der Öffnung anliegt.

In nochmaliger Weiterbildung kann auch vorgesehen sein, dass die Hülse während der Bewegung des Griffsanschlags am Rand der Öffnung immer anliegt.

Die Öffnung kann im Bereich ihrer beiden Enden eine der Außenform der Hülse entsprechende Innenform aufweisen, wobei die beiden Enden durch geradlinige Abschnitte miteinander verbunden sind.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:
- Fig. 1: einen Querschnitt durch die Anordnung eines Drehgriffs an einer Spindel;
- Fig. 2: einen Längsschnitt durch die Anordnung der Fig. 1;
- Fig. 3: einen der Fig. 1 entsprechenden Schnitt bei einer zweiten Ausführungsform;
- Fig. 4: einen der Fig. 2 entsprechenden Längsschnitt der zweiten Ausführungsform;
- Fig. 5: eine Ansicht des dem Handgriff zugeordneten Anschlagelements;
- Fig. 6: einen Längsschnitt durch das Anschlagelement der Fig. 5;
- Fig. 7: eine Aufsicht auf ein der Armatur zugeordnetes Anschlagelement;
- Fig. 8: einen Querschnitt durch das Anschlagelement der Fig. 7;
- Fig. 9: eine Ansicht eines zweiten ventilseitigen Anschlagelements;
- Fig. 10: einen Schnitt durch das Anschlagelement der Figur 9;
- Fig. 11: eine der Fig. 5 entsprechende Darstellung eines weiteren dem Handgriff zugeordneten Anschlagelements.

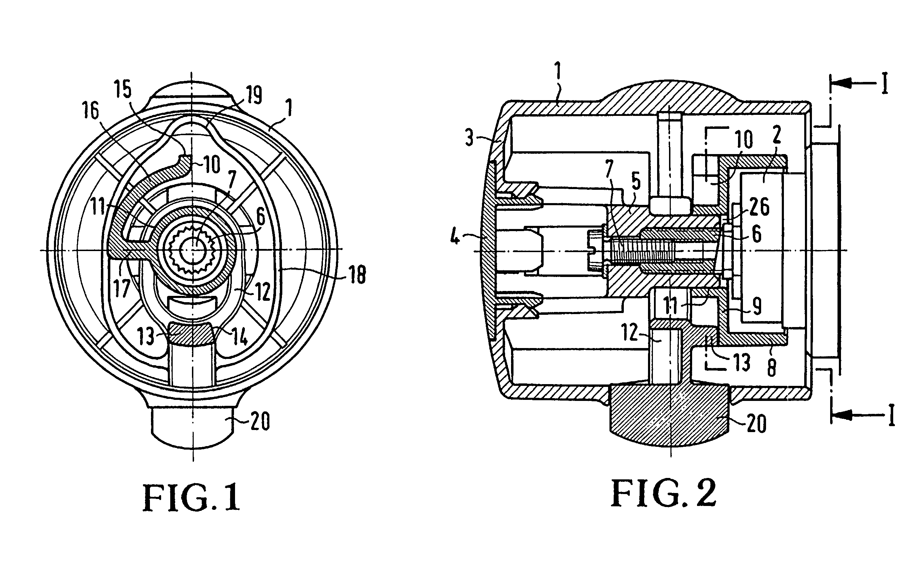

Figur 1 zeigt einen Querschnitt durch einen Drehgriff nach der Erfindung, der mit einer Drehspindel eines Sanitärventils verbunden ist. Der Schnitt verläuft längs der Linie I-I in Fig. 2. Der Drehgriff enthält eine äußere Griffschale 1, die etwa zylindrisch ausgebildet und auf ihrer dem Ventil 2 abgewandten Seite durch eine gewölbte Frontplatte 3 abgeschlossen ist. In der Frontplatte ist eine Öffnung vorhanden, die durch einen Deckel 4 verschlossen werden kann.

An der Innenseite der Griffschale 1 ist eine koaxiale Hülse 5 angeformt, die dazu dient, die Griffschale an der Spindel 6 des Sanitärventils 2 anzuschrauben. Die Hülse 5 enthält eine zentrale Innenbohrung, mit der sie auf die außen gezackte Spindel 6 aufgeschoben wird. Dadurch wird eine drehfeste Verbindung zwischen dem Griff und der Spindel 6 hergestellt. Zur axialen Sicherung dient eine Schraube 7, die in die Drehspindel 6 eingeschraubt ist.

Auf dem Sanitärventil ist ein Anschlagelement 8 festgelegt, das auf seiner dem Sanitärelement 2 zugewandten Seite eine Hülse mit einer Innenverzahnung bildet. Diese Hülse ist durch einen Boden 9 abgeschlossen, der eine Öffnung 26 zum Durchführen der Spindel aufweist. Auf der dem Sanitärventil 2 abgewandten Seite des Bodens 9 ist eine Stopfläche 10 ausgebildet, die etwa radial gegenüber der Achse der Gewindespindel 6 verläuft. Die Stopfläche 10 weist einen radialen Abstand von einer inneren Hülse 11 auf, die die Hülse 5 des Griffs mit geringem Abstand umgibt.

Auf der Hülse 5 des Griffs ist ein Anschlagelement 12 verschiebbar gelagert, das an seiner dem Ventil 2 zugewandten Seite ein Stopelement 13 mit einer Stopfläche 14 aufweist. Die Stopfläche 14 liegt in axialer Richtung an der gleichen Stelle wie die Stopfläche 10 des dem Ventil zugeordneten Anschlagelementes 8. In Umfangsrichtung gesehen liegt die Stopfläche 14 ebenfalls an der gleichen Stelle wie die Stopfläche 10. Wird das Anschlagelement 12 in der in Figur 1 dargestellten Stellung im Gegenuhrzeigersinn in Richtung einer Öffnung des Ventils verdreht, so gelangt nach einer halben Umdrehung die Stopfläche 14 zur Anlage an der Stopfläche 10. Damit ist die Drehbewegung begrenzt.

Die Stopfläche 10 ist an dem leicht nach außen abgebogenen Ende 15 eines an dem Boden 9 angeformten Wandabschnitts 16 ausgebildet. Der Wandabschnitt 16 verläuft längs eines Bogens über ein Viertel des Umfangs konzentrisch zu der erwähnten Hülse 11. Dadurch ist zwischen der Hülse 11 und dem Wandabschnitt 16 ein Zwischenraum gebildet, in dem das Stoppelement 13 geführt werden kann, bis es an dem Quersteg 17 zur Anlage kommt. Der Quersteg 17 verbindet die innere Hülse 11 mit dem Wandabschnitt 16. In den Zwischenraum kann das Stoppelement 13 dann gelangen, wenn das Anschlagelement 12 gegen die Wirkung einer Feder 18 verschoben wird.

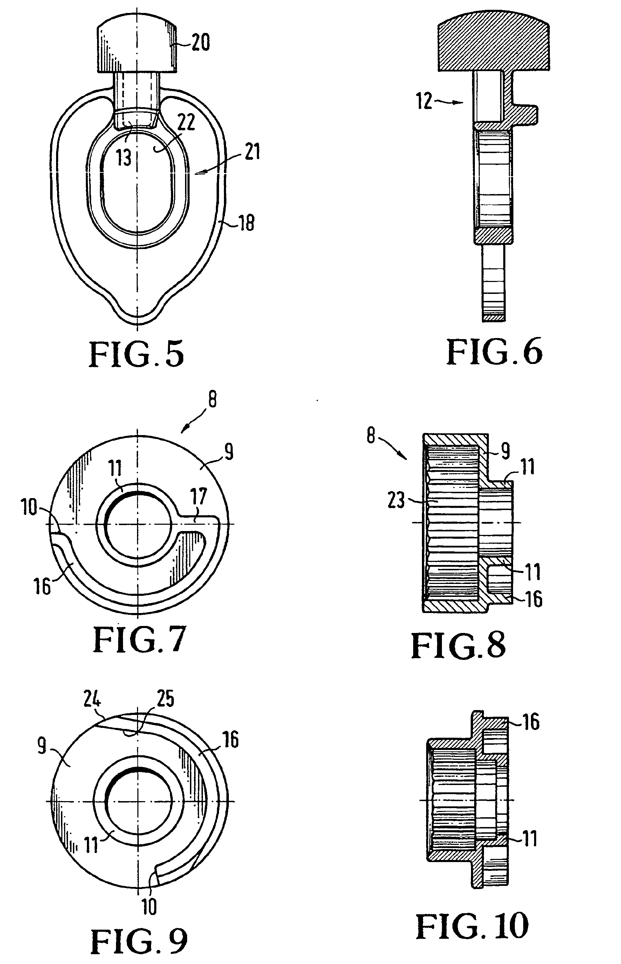

Die Feder 18 ist als einstückige bügelförmige aus Kunststoff bestehende Feder ausgebildet und an beiden Seiten des Anschlagelementes 12 angeformt. Die Feder 18 erstreckt sich über den gesamten Umfang des Griffs und stützt sich mit einer Ausbuchtung 19 an einer Stelle an der Innenseite der Griffschale 1 ab, die einem Betätigungselement 20 diametral gegenüber liegt. Das Betätigungselement 20 ist entweder einstückig oder als aufsetzbares Teil an dem Anschlagelement 12 befestigt und ragt durch die Griffschale 1 hindurch. Das Anschlagelement 12, siehe auch Fig. 5, enthält einen Führungsabschnitt 21, der eine ovale Öffnung 22 aufweist. Die Fläche der Öffnung 22 steht senkrecht zur Achse der Drehspindel und damit der Hülse 5. Die Hülse 5, die einen kreisförmigen Außenumfang aufweist, greift durch die Öffnung 22 hindurch und liegt in der in Figur 1 dargestellten Position an der dem Betätigungselement 21 abgewandten Seite über einen halben Umfang an dem Rand der Öffnung 22 an. Dadurch wird die Ausgangsposition des Anschlusselements 12 bestimmt. In dieser Ausgangsposition liegt die Stopfläche 14 des Stopelements 13 auf einem Radius, der dem Radius gleich ist, auf dem die Stopfläche 10 liegt. Aus dieser durch die Feder 18 bewirkten Position kann das Anschlagelement radial nach innen verschoben werden, bis das Stopelement an der Hülse 11 und die Hülse 5 an dem Ende der Öffnung 22 anliegt. Dies ist eine Position, die der Überwindung des Anschlags entspricht.

Fig. 6 zeigt einen Längsschnitt durch das einstückig ausgebildete Anschlagelement 12 der Figur 5.

Fig. 7 zeigt noch einmal den Wandabschnitt 16 mit der an seinem Ende gebildeten Stopfläche 10, die beide an dem Boden 9 des dem Ventil 2 zugeordneten Anschlusselements 8 angeformt sind.

Figur 8 zeigt einen Schnitt durch das Anschlagelement 8, wobei die Verzahnung 23 an der Innenseite der Hülse zu sehen ist.

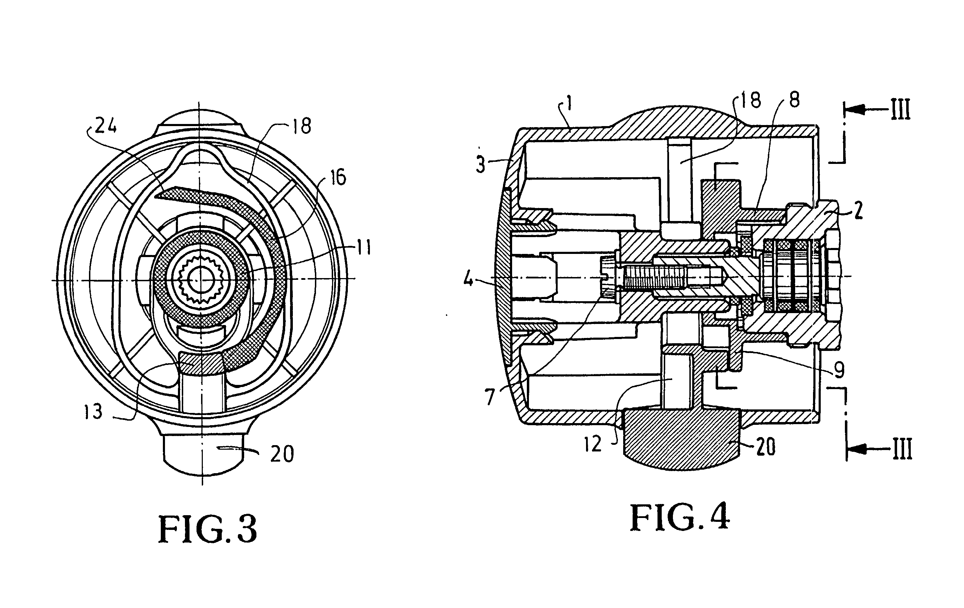

Während bei der in den Figuren 1, 2 und 5 bis 8 dargestellten Ausführungsform die Drehbewegung des Drehgriffs nach Überwindung des Anschlags durch den Quersteg 17 begrenzt ist, zeigen die Fig. 3, 4, 9 und 10 eine Ausführungsform, bei der nach der Überwindung des Anschlags ein Weiterdrehen auch um einen größeren Winkel möglich ist. Wieder wird die Stopfläche 10 von dem Anfang des Wandabschnitts 16 gebildet, der am Boden 9 des dem Ventil zugeordneten Anschlagelements 8 angeformt ist. In diesem Fall ist der Wandabschnitt 16 aber nicht mit Hilfe eines Querstegs mit der inneren Hülse 11 verbunden, sondern bleibt von der Hülse 11 getrennt. Im Bereich seines der Stopfläche 14 abgewandten Endes verläuft der Wandabschnitt 16 gegenüber einer Umfangslinie schräg nach außen, wobei sein Ende 24 an einer Stelle liegt, die sich nicht mehr mit dem Weg des Stopelements 13 überschneidet. Der Drehgriff kann nach Drücken des Betätigungselements 20 nicht nur über die Stopfläche 10 hinaus verdreht werden, sondern auch über das Ende 24 des Wandabschnitts 16 hinaus. Beim Zurückdrehen bleibt der Anschlag 13 nicht an dem Ende 24 hängen, sondern gleitet allmählich an der Innenseite 25 des Wandabschnitts 16 nach innen.

Das in Fig. 5 einzeln dargestellte dem Griff zugeordnete Anschlagelement wird von der Innenseite der Griffschale 1 eingesetzt. Dies wird durch die Feder 18 mit dem langen Federweg ermöglicht.

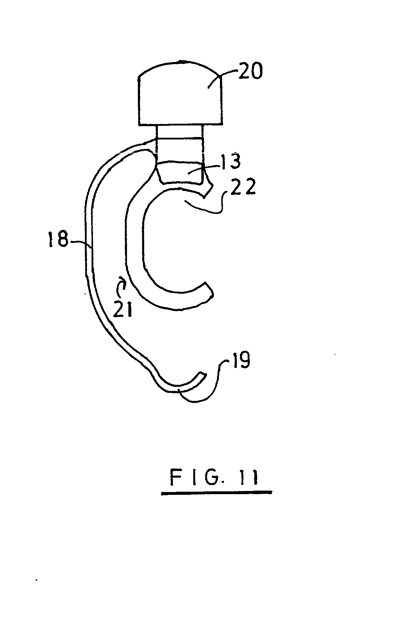

Es ist jedoch ebenfalls möglich, das dem Griff zugeordnete Anschlagelement so auszugestalten, dass es sich durch die Öffnung für den Betätigungsknopf 20 von außen her in den Griff einsetzen lässt. Dies ist in Fig. 11 dargestellt. Hier weist die Feder 18 ebenfalls die Form eines Bügels auf, allerdings eines nicht geschlossenen Bügels, der sich von dem Anschlagelement über etwas mehr als eine halbe Bogenlänge erstreckt. Auch der Vorsprung 19 ist ausgebildet.

Weiterhin ist der Führungsabschnitt 21 so ausgebildet, dass er die Hülse nur teilweise umgibt. Die Führungsbahn 21 ist also nur einseitig ausgebildet, so dass die Hülse zwar in beiden Endstellungen an der Führungsbahn anliegen kann, während der Bewegung aber nur an einer Seite.

Das in Fig. 11 dargestellte Anschlagelement kann durch die Öffnung, deren Durchmesser der Querabmessung des Betätigungsknopfs 20 entspricht, seitlich eingeschoben werden.

## Patentansprüche

1. Anordnung für ein Sanitärventil (2), mit einem Drehgriff, einem Anschlagelement (8), einer Hülse (5) und einem weiteren Auschlagelement (12), wobei das eine Auschlagelement (8) an dem Sanitärventil in einer festen Winkelposition anbringbar ist und eine etwa radial zu der Drehachse der Ventilspindel (6) verlaufende Stoppfläche (10) aufweist, wobei
die Hülse (5) zur mindestens drehfesten Verbindung mit der Drehspindel (6) des Sanitärventils (2) vorgesehen ist und wobei das weitere Anschlagelement (12) verstellbar an dem Drehgriff gehaltert ist und eine durch Verdrehen des Drehgriffs mit der Stoppfläche (10) des ventilseitigen Anschlagelementes (8) in Eingriff bringbare Stoppfläche (14) aufweist, **dadurch gekennzeichnet, dass** das dem Drehgriff zugeordnete Anschlagelement (12) an der Hülse (5) geführt ist und einen Führungsabschnitt (21) aufweist, an dem die Hülse (5) mindestens in der Anschlagposition des dem Griff zugeordneten Anschlags (12) anliegt und der die Hülse mindestens teilweise umgibt.

2. Anordnung nach Anspruch 1, bei der das dem Griff zugeordnete Anschlagelement (12), in eine Position federbeaufschlagt ist, in der die Stoppfläche (10) des dem Ventil (2) zugeordneten Anschlagelements (8) in dem Weg seiner Stoppfläche (14) liegt, den diese bei Verdrehung des Drehgriffs beschreibt.

3. Anordnung nach Anspruch 1 oder 2, bei der das dem Griff zugeordnete Anschlagelement (12) etwa radial zur Drehachse der Spindel (6) verschiebbar ist.

4. Anordnung nach einem der vorhergehenden Ansprüche, bei dem die Feder (18) aus Kunststoff besteht und einstückig mit dem dem Drehgriff zugeordneten Anschlagelement (12) ausgebildet ist.

5. Anordnung nach einem der vorhergehenden Ansprüche, bei der die Feder (18) als Bügel ausgebildet ist und sich im Bereich einer einem Betätigungselement (20) diametral gegenüberliegenden Stelle an dem Griff abstützt.

6. Anordnung nach Anspruch 5, bei der die Feder (18) symmetrisch zu einer das Betätigungselement (20) mit der Abstützstelle verbindenden Linie ausgebildet ist.

7. Anordnung nach einem der vorhergehenden Ansprüche, bei der die Stoppfläche (10) des dem Ventil (2) zugeordneten Anschlagelements (8) an einem sich etwa in Drehrichtung um die Drehachse erstreckenden Wandabschnitt (16) ausgebildet ist, an dem das die Stoppfläche (14) aufweisende Element des dem Griff zugeordneten Anschlagelementes (12) bei Weiterdrehung gleitend anliegt.

8. Anordnung nach Anspruch 7, bei der der Wandabschnitt (16) einen in dem Weg der Stoppfläche (14) liegenden Quersteg (17) aufweist.

9. Anordnung nach Anspruch 7 oder 8, bei der der Wandabschnitt (16) zylindrisch ausgebildet ist.

10. Anordnung nach einem der Ansprüche 7 bis 9, bei der der Wandabschnitt (16) koaxial angeordnet ist.

11. Anordnung nach einem der Ansprüche 7 bis 9, bei der der Wandabschnitt (16) exzentrisch angeordnet ist.

12. Anordnung nach Anspruch 7 oder 8, bei der der Wandabschnitt (16) spiralförmig ausgebildet ist.

13. Anordnung nach einem der Ansprüche 7 bis 12, bei der der Wandabschnitt (16) im Bereich seines seiner Stoppfläche (10) abgewandten Endes (24) derart verläuft, dass er nicht im Weg der Stoppfläche (14) des dem Griff zugeordneten Anschlagelements (12) liegt.

14. Anordnung nach einem der vorhergehenden Ansprüche, bei der der Führungsabschnitt eine vorzugsweise geschlossene Öffnung (22) aufweist, durch die die Hülse (5) hindurchgreift.

15. Anordnung nach Anspruch 14, bei der die Hülse (5) in beiden Endstellungen der Bewegung des dem Griff zugeordneten Anschlagelements (12) an dem Rand der Öffnung (22) anliegt.

16. Anordnung nach Anspruch 14 oder 15, bei der die Hülse (5) während der Bewegung des dem Griff zugeordneten Anschlagelements (12) an dem Führungsabschnitt (21), insbesondere am Rand der Öffnung (22) anliegt.

## Claims

1. Arrangement for a plumbing valve (2) with a rotary handle, a stop element (8), a sleeve (5) and a further stop element (12), whereby the one stop element (8) is affixable to the plumbing valve in a fixed angular position, and has a stop surface (10) approximately radial to the rotary axis of the valve spindle (6), whereby the sleeve (5) is provided for at least a nonrotating connection with the rotary spindle (6) of the plumbing valve (2), and the other stop element (12) is adjustably mounted on the rotary handle, and has a stop surface (14) and that meshes with the stop surface (10) of the valve-side stop element (8) when the rotary handle is turned, **characterized in that** the stop element (12) assigned to the rotary handle is guided on the sleeve (5), and has a guide section (21) on which the sleeve (5) rests at least when the stop element (12) assigned to the handle is in the stop position, and the guide section at least partially surrounds the sleeve.

2. Arrangement according to claim 1, wherein the stop element (12) assigned to the handle is spring-loaded in a position in which the stop surface (10) of the stop element (8) assigned to the valve (2) lies in the path of its stop surface (14) which is traveled when the rotary handle is turned.

3. Arrangement according to claim 1 or 2, wherein the stop element (12) assigned to the handle can be moved more or less radially in relation to the rotary axis of the spindle (6).

4. Arrangement according to one of the preceding claims, wherein the spring (18) is plastic and forms a single piece with the stop element (12) assigned to the rotary handle.

5. Arrangement according to one of the preceding claims, wherein the spring (18) is designed as a bracket that abuts the handle at a site diametrically opposite of the actuation element (20).

6. Arrangement according to claim 5, wherein the spring (18) is symmetrical to a line connecting the actuation element (20) with the abutting site.

7. Arrangement according to one of the preceding claims, wherein the stop surface (10) of the stop element (8) assigned to the valve (2) is on a wall section (16) extending around the rotary axis approximately in the direction of rotation, and the element having the stop surface (14) of the stop element (12) assigned to the handle glides against the wall section when further rotated.

8. Arrangement according to claim 7, wherein the wall section (16) has a crossbar (17) lying in the path of the stop surface (14).

9. Arrangement according to claim 7 or 8, wherein the wall section (16) is cylindrically formed.

10. Arrangement according to one of claims 7 to 9, wherein the wall section (16) is arranged coaxially.

11. Arrangement according to one of claims 7 to 9, wherein the wall section (16) is arranged eccentrically.

12. Arrangement according to claim 7 or 8, wherein the wall section (16) is helically formed.

13. Arrangement according to one of claims 7 to 12, wherein the wall section (16) in the area of its end (24) opposite its stop surface (10) runs in a manner that it is not in the way of the stop surface (14) of the stop element (12) assigned to the handle.

14. Arrangement according to one of the preceding claims, wherein the guide section is provided with a preferably closed opening (22) through which the sleeve (5) reaches.

15. Arrangement according to claim 14, wherein the sleeve (5) abuts the edge of the opening (22) in both positions of movement of the stop surface (12) assigned to the handle.

16. Arrangement according to claim 14 or 15, wherein the sleeve (5) abuts especially the edge of the opening (22) during the movement of the stop surface (12) assigned to the handle along the guide section (21).

## Revendications

1. Agencement pour une soupape sanitaire (2) comprenant une poignée rotative, un élément de butée (8), une douille (5) et un élément de butée supplémentaire (12), l'un élément de butée (8) pouvant être mis dans une position angulaire fixe sur la soupape sanitaire et présentant une surface d'arrêt (10) s'étendant à peu près en direction radiale par rapport à l'axe de rotation de la tige de soupape (6),
la douille (5) étant prévue pour l'au moins raccordement résistant à la torsion avec la tige pivotante (6) de la soupape sanitaire (2) et l'élément de butée supplémentaire (12) étant maintenu de manière réglable sur la poignée rotative et présentant une surface d'arrêt (14) pouvant être mise en prise avec la surface d'arrêt (10) de l'élément de butée (8) côté soupape par rotation de la poignée rotative, **caractérisé en ce que** l'élément de butée (12) associé à la poignée rotative est mené sur la douille (5) et présente une section de guidage (21) à laquelle la douille (5) est adjacente au moins dans la position de butée de la butée (12) associée à la poignée et qui entoure la douille au moins en partie.

2. Agencement selon la revendication 1, dans lequel l'élément de butée (12) associé à la poignée est contraint par ressort dans une position dans laquelle la surface d'arrêt (10) de l'élément de butée (8) associé à la soupape (2) se trouve dans la trajectoire de sa surface d'arrêt (14), que celle-ci décrit lors de la rotation de la poignée rotative.

3. Agencement selon la revendication 1 ou 2, dans lequel l'élément de butée (12) associé à la poignée est déplaçable à peu près en direction radiale par rapport à l'axe de rotation de la tige (6).

4. Agencement selon l'une quelconque des revendications précédentes, dans lequel le ressort (18) est en matière plastique et est exécuté d'une seule pièce avec l'élément de butée (12) associé à la poignée rotative.

5. Agencement selon l'une quelconque des revendications précédentes, dans lequel le ressort (18) est exécuté en étrier et s'appuie sur la poignée dans la zone d'un point diamétralement opposé à un élément de commande (20).

6. Agencement selon la revendication 5, dans lequel le ressort (18) est exécuté de manière symétrique par rapport à une ligne raccordant l'élément de commande (20) au point d'appui.

7. Agencement selon l'une quelconque des revendications précédentes, dans lequel la surface d'arrêt (10) de l'élément de butée (8) associé à la soupape (2) est exécutée sur une section murale (16), s'étendant à peu près dans la direction de rotation autour de l'axe de rotation, à laquelle section murale l'élément, présentant la surface d'arrêt (14), de l'élément de butée (12) associé à la poignée est adjacent de manière coulissante lorsqu'on continue de le tourner.

8. Agencement selon la revendication 7, dans lequel la section murale (16) présente une nervure transversale (17) située dans la trajectoire de la surface d'arrêt (14).

9. Agencement selon la revendication 7 ou 8, dans lequel la section murale (16) est exécutée de manière cylindrique.

10. Agencement selon l'une quelconque des revendications 7 à 9, dans lequel la section murale (16) est disposée de manière coaxiale.

11. Agencement selon l'un quelconque des revendications 7 à 9, dans lequel la section murale (16) est disposée de manière excentrique.

12. Agencement selon la revendication 7 ou 8, dans lequel la section murale (16) est exécutée en forme de spirale.

13. Agencement selon l'une quelconque des revendications 7 à 12, dans lequel la section murale (16), dans la partie de son extrémité (24) opposée à sa surface d'arrêt (10), s'étend de telle manière qu'elle n'est pas située dans la trajectoire de la surface d'arrêt (14) de l'élément de butée (12) associé à la poignée.

14. Agencement selon l'une quelconque des revendications précédentes, dans lequel la section de guidage présente un orifice (22) de préférence fermé, à travers lequel la douille (5) a prise.

15. Agencement selon la revendication 14, dans lequel la douille (5), dans les deux positions finales du mouvement de l'élément de butée (12) associé à la poignée, est adjacente au bord de l'orifice (22).

16. Agencement selon la revendication 14 ou 15, dans lequel la douille (5), dans les deux positions finales du mouvement de l'élément de butée (12) associé à la poignée, est adjacente à la section de guidage (21), en particulier au bord de l'orifice (22).
